# EUROPÄISCHE PATENTSCHRIFT

(11) **EP 2 812 218 B1**
(45) Veröffentlichungstag und Bekanntmachung des Hinweises auf die Patenterteilung: **21.08.2019**
(21) Anmeldenummer: 13703385.8
(22) Anmeldetag: 06.02.2013
(51) Int. Cl.: B60T 13/36, B60T 17/08, B60T 17/16

(54) **VERFAHREN ZUM BETRIEB EINES KOMBINIERTEN BETRIEBS- UND FESTSTELLBREMSZYLINDERS**
METHOD FOR THE USE OF A COMBINED SERVICE AND PARKING BRAKE CYLINDER
PROCÉDÉ POUR LE SERVICE D'UN CYLINDRE COMBINÉ DE FREIN DE SERVICE ET FREIN DE VERROUILLAGE

(30) Priorität: 10.02.2012 DE 102012002730
(43) Veröffentlichungstag der Anmeldung: 17.12.2014
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(86) Internationale Anmeldenummer: PCT/EP2013/052354
(87) Internationale Veröffentlichungsnummer: WO 2013/117604

(56) Entgegenhaltungen:
- DE-T2-602004 002 543
- US-A- 3 267 819
- US-A- 3 410 610

## Beschreibung

### Stand der Technik

Die Erfindung geht aus von einem Verfahren zum Betrieb eines kombinierten Betriebs- und Feststellbremszylinders einer druckmittelbetätigten Fahrzeugbremsanlage, gemäß dem Oberbegriff von Anspruch 1.

Ein gattungsgemäßes Verfahren ist aus US 3 410 610 A bekannt. Bei einer Betriebsbremsung wird die Steuerkammer des Feststellbremszylinders entlüftet und die Betriebsbremskammer belüftet, während die Verriegelungseinrichtung zur Verriegelung des Feststellbremskolbens nicht betätigt wird.

Ein kombinierter Betriebsbrems- und Feststellbremszylinder ist beispielsweise aus der DE 60 2004 002 543 T2 bekannt. Dort wird eine Betriebsbremskammer des Betriebsbremszylinders von einer von einem Betriebsbremsbetätigungsorgan betätigen Ventileinrichtung mit Betriebsbremsdruck versorgt. Die Betriebsbremskammer wirkt auf eine Baugruppe aus Membrane, Rückstellfeder und Druckstange auf einen Bremsmechanismus.

Weiterhin wird ein Luftzylinder, welcher den Feststellbremszylinder bildet, mit einem pneumatischen Steuerdruck versorgt, welcher abhängig von der Betätigung eines Feststellbremsbetätigungsorgans von einem Vorratsbehälter für die Feststellbremse abgeleitet ist. Der Feststellbremszylinder kann über eine Verriegelungseinrichtung in Feststellbremsstellung verriegelt werden.

Bei dem kombinierten Betriebsbrems- und Feststellbremszylinder des Stands der Technik muss bei einer Betriebsbremsung zunächst das Lüftspiel überwunden werden. Unter dem Lüftspiel wird dabei der Zustellweg der Bremsbeläge zu dem Reibungspartner wie eine Bremsscheibe verstanden, welcher von den Bremsbelägen ausgehend von der Bremslösestellung bis zu einer Stellung zurückzulegen ist, in welcher die Bremsbeläge an die Bremsscheibe herangefahren sind, aber noch keine Reibungs- bzw. Bremskräfte erzeugt werden.

Dabei wird in die Betriebsbremskammer ein relativ geringer Bremsdruck eingesteuert, um das relativ große Lüftspiel zu überwinden. Dabei bewegt sich die Membrane zusammen mit der Druckstange um das Lüftspiel in Bremszuspannrichtung unter Vergrößerung der Betriebsbremskammer. Zu Beginn des Aufbaus der Bremskraft nach überwundenem Lüftspiel ist daher die mit Bremsdruck zu beaufschlagende Betriebsbremskammer relativ groß, so dass das zum Aufbau der Bremskraft notwendige und in die Betriebsbremskammer einzusteuernde Luftvolumen ebenfalls relativ groß ist. Dies bedingt einen hohen Luftverbrauch.

Der vorliegenden Erfindung liegt demgegenüber die Aufgabe zugrunde, ein Verfahren zum Betrieb eines kombinierten Betriebs- und Feststellbremszylinders derart weiter zu entwickeln, dass im Betrieb ein geringerer Druckluftverbrauch erzielt wird.

Diese Aufgabe wird erfindungsgemäß durch die Merkmale von Anspruch 1 gelöst.

### Offenbarung der Erfindung

Ausgangspunkt ist, dass die Betriebsbremskammer zwischen der einen Membrane und einer weiteren Membrane gebildet wird, welche mit dem Feststellbremskolben verbunden und zusammen mit diesem in Bremszuspann- und Bremslöserichtung der Bremse bewegbar ist.

### Erfindungsgemäß wird dann einer Betriebsbremsanforderung

a) die wenigstens eine Steuerkammer des Feststellbremskolbens mit einem ersten Druck druckmittelbeaufschlagt wird, der ausreichend ist, den Feststellbremskolben zusammen mit den Membranen in eine Lüftspielüberwindungsstellung zu betätigen, in welcher gerade das Lüftspiel der Bremse überwunden wird, und dann
b) der Feststellbremskolben mittels der Verriegelungseinrichtung in der Lüftspielüberwindungsstellung verriegelt wird, und dann
c) die Betriebsbremskammer mit einem zweiten Druck beaufschlagt wird, um die eine Membrane relativ zu der zusammen mit dem Feststellbremskolben verriegelten weiteren Membrane in Bremszuspannrichtung zu betätigen und dadurch die Betriebsbremskraft zu erzeugen.

Diese weitere Membrane bildet dann eine verschiebbare Begrenzung der Betriebsbremskammer, welche zur Überwindung des Lüftspiels in eine das Volumen der Betriebsbremskammer verkleinernde Richtung verschoben wird. Diese weitere Membrane wird zusammen mit dem Feststellbremskolben in der Lüftspielüberwindungsstellung von der Verriegelungseinrichtung arretiert. Somit ist das Volumen der Betriebsbremskammer zu Beginn der Einsteuerung des die Bremskräfte erzeugenden Bremsdrucks vorteilhaft klein, so dass der Druckmittelverbrauch des kombinierten Betriebs- und Feststellbremszylinder gering ist.

Ein weiterer Vorteil besteht darin, dass die Verriegelungseinrichtung auch zum Verriegeln des Feststellbremskolbens in der Feststellbremsstellung herangezogen werden kann, wie aus den nachfolgenden Ausführungen hervorgeht.

Aufgrund dieser Multifunktionalität kann der Betriebs- und Feststellbremszylinder sehr kompakt bauen bei geringem Gewicht. Nicht zuletzt wird mit der weiteren Membrane ein bekanntes Serienbauteil verwendet, so dass die Kosten für den Betriebs- und Feststellbremszylinder niedrig ausfallen.

Das Verfahren gemäß der Erfindung ist für jegliche druckmittelgesteuerte kombinierte Betriebs- und Feststellbremszylinder anwendbar, insbesondere für pneumatisch oder hydraulisch gesteuerte.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt wird bei einer Feststellbremsanforderung die Steuerkammer des Feststellbremskolbens mit einem Druck druckmittelbeaufschlagt, welcher den Feststellbremskolben zusammen mit der weiteren Membrane und der einen Membrane in eine Feststellbremsstellung betätigt, in welcher eine vorgegebene Feststellbremskraft erzeugt wird, und der Feststellbremskolben mittels der Verriegelungseinrichtung in der Feststellbremsstellung verriegelt. Dabei steht die Steuerkammer des Feststellbremskolbens mit einem Druckanschluss in Verbindung.

Weiterhin kann vorgesehen sein, dass die Verriegelungseinrichtung von dem in eine Steuerkammer der Verriegelungseinrichtung eingesteuerten Druck druckmittelgesteuert wird, wobei die Steuerkammer der Verriegelungseinrichtung mit einem weiteren Druckanschluss in Verbindung steht, mit welchem auch die Betriebsbremskammer verbunden ist. Somit wird die Verriegelungseinrichtung auch von dem Betriebsbremsdruck gesteuert, welcher auch zur Erzeugung der Bremskräfte in die Betriebsbremskammer eingesteuert wird.

Besonders bevorzugt ist der eine Druckanschluss über ein Rückschlagventil mit dem weiteren Druckanschluss verbunden, wobei das Rückschlagventil eine Strömung von dem einen Druckanschluss zu dem weiteren Druckanschluss erlaubt, aber eine Strömung von dem weiteren Druckanschluss zu dem einen Druckanschluss unterbindet.

Besonders bevorzugt weist die Verriegelungseinrichtung wenigstens ein durch den in der Steuerkammer des Feststellbremszylinders anstehenden Druck steuerbares Betätigungselement auf, welches einerseits wenigstens ein durch Federmittel außer Eingriff mit einem zylinderfesten Bauteil vorgespanntes und am Feststellbremskolben geführtes Verriegelungselement in Eingriff mit dem zylinderfesten Bauteil und andererseits den Feststellbremskolben in Zuspannrichtung betätigt. Mit anderen Worten hat dieses durch den Betriebsbremsdruck in der Steuerkammer des Feststellbremszylinders betätigte Betätigungselement eine vorteilhafte Doppelfunktion, indem es einerseits den Feststellbremskolben in Zuspannstellung bringt bzw. hält und andererseits auch die Verriegelungseinrichtung betätigt.

Gemäß einer besonders bevorzugten Realisierung dieser Doppelfunktion betätigt das Betätigungselement das Verriegelungselement und den Feststellbremskolben mittels einer Keilübersetzung, wobei eine axiale Betätigung des Betätigungselements infolge einer Betriebsbremsdruckeinsteuerung in die Steuerkammer des Feststellbremszylinders den Feststellbremskolben axial in Zuspannrichtung und das Verriegelungselements radial in Eingriff mit einem zylinderfesten Bauteil drängt.

Das zylinderfeste Bauteil wird beispielsweise durch eine im Feststellbremszylinder angeordnete Hohlstange gebildet, an deren radial äußerer Umfangsfläche eine Eingriffsfläche für das wenigstens eine Verriegelungselement ausgebildet ist.

Gemäß einer Weiterbildung sind mehrere die Hohlstange kreisringartig umschließende und gegeneinander federbelastete Verriegelungselemente derart vorgesehen, dass die Verriegelungselemente nach radial außen, in eine von der Eingriffsfläche entfernte Lage gedrängt sind.

Die Keilübersetzung kann einen ersten keilförmigen Querschnitt mit dem wenigstens einen Verriegelungselement aufweisen, welcher gegenüber einem weiteren keilförmigen Querschnitt der Keilübersetzung derart federbelastet ist, dass der eine keilförmige Querschnitt von dem weiteren keilförmigen Querschnitt Axialrichtung gesehen weg gedrängt ist.

Bevorzugt ist das Betätigungselement als ein in Axialrichtung auf den einen keilförmigen Querschnitt Druck ausübender Ring ausgebildet.

Der Feststellbremskolben ist beispielsweise gegen den in der Steuerkammer des Feststellbremszylinders herrschenden Druck in Bremslöserichtung federbelastet und als ein am radial äußeren Umfang der Hohlstange axial geführter Hohlkolben ausgebildet, mit einem offenen Ende, an welchem die Keilübersetzung sowie das Betätigungselement aufgenommen sind sowie mit einem als Boden ausgebildeten anderen Ende, wobei in der Wandung des Feststellbremskolbens wenigstens ein Verbindungskanal ausgebildet ist, um in Bremszuspannstellung das Innere des Feststellbremskolbens mit der Betriebsbremskammer zu verbinden.

Die Steuerkammer kann dann als Ringkammer zwischen dem Betätigungselement und einem Ende des Feststellbremszylinders ausgebildet sein.

Das wenigstens eine Verriegelungselement und das zylinderfeste Bauteil sind bevorzugt derart ausgebildet sind, dass ein Formschluss zwischen dem Verriegelungselement und dem zylinderfesten Bauteil durch eine Bewegung des Feststellbremskolbens in Bremslöserichtung herstellbar und durch eine Bewegung des Feststellbremskolbens in Bremszuspannrichtung lösbar ist.

Der Formschluss wird dann durch die im Feststellbremsfall wirkenden Bremskräfte verstärkt. Zum Lösen der formschlüssigen Verbindung muss daher zunächst der Feststellbremskolben in Bremszuspannrichtung durch Anlegen des Betriebsbremsdrucks belastet werden. Dies ist ohne weiteres möglich, als die zum Feststellbremsen benötigte Feststellbremskraft nur ca. 30% der maximalen Betriebsbremskraft beträgt und der Feststellbremskolben bzw. der von ihm belastete Betriebsbremskolben ausgehend vom Feststellbremszustand noch weiter in Bremszuspannrichtung belastet werden kann.

Eine druckmittelbetätigte Bremsanlage eines Fahrzeugs kann wenigstens einen vorangehend beschriebenen kombinierten Betriebs- und Feststellbremszylinder beinhalten, der nach dem erfindungsgemäßen Verfahren betrieben wird.

Das Verfahren zum Betreiben des kombinierten Betriebs- und Feststellbremszylinder beinhaltet dann folgende Schritte:
Zum Betriebsbremsen wird der eine Druckanschluss mit einem Druck p1 beaufschlagt, welcher mit der Steuerkammer des Feststellbremskolbens in Verbindung steht. Der Druck p1 ist dabei gerade so groß, dass der Feststellbremskolben zusammen mit der weiteren Membrane in Zuspannrichtung bis zur Lüftspielüberwindungsstellung betätigt wird.

Sodann wird der Feststellbremskolben zusammen mit der weiteren Membrane in der Lüftspielüberwindungsstellung arretiert, indem in den weiteren Druckanschluss ein gegenüber dem Druck p1 größerer Druck p2 eingesteuert wird, welcher auf das Betätigungselement der Verriegelungseinrichtung und damit auf die Keilübersetzung wirkt. Weiterhin wird der Druck p1 an dem einen Druckanschluss und damit in der Steuerkammer des Feststellbremskolbens etwas gesenkt, damit sich der Feststellbremskolben etwas in Bremslöserichtung bewegen kann, wodurch die Verriegelungseinrichtung den Feststellbremskolben in der Lüftspielüberwindungsstellung verriegelt.

Im Einzelnen drängt unter dem Einfluss des Drucks p2 das Betätigungselement über die Keilübersetzung das wenigstens eine Verriegelungselement in Eingriff mit der zylinderfesten Eingriffsfläche, jedoch ist dessen Federvorspannung noch zu groß, um einen Eingriff zuzulassen. Erst wenn der Druck p1 etwas gesenkt worden ist, sinkt der Druck am Feststellbremskolben, so dass sich dieser ein kleines Stück weit in Bremslöserichtung bewegen kann, wodurch der Eingriff zwischen dem Verriegelungselement und der Eingriffsfläche stattfindet. Der Druck p1 auf den Feststellbremskolben wird dann Aufrecht erhalten.

Die Einsteuerung des Drucks p2 an dem weiteren Druckanschluss bewirkt einen Druckanstieg in der Betriebsbremskammer, so dass die eine Membrane mit der Druckstange in Bremszuspannrichtung gedrängt wird, um die Bremskraft zu erzeugen. Der Unterschied zwischen einer Teilbremsung, d.h. einer Bremsung mit gegenüber einer maximalen Bremskraft reduzierten Bremskraft und einer Vollbremsung mit der maximalen Bremskraft liegt dann in der Höhe des Drucks p2.

Zum Lösen der Betriebsbremse wird der Druck p2 auf den Wert des Drucks p1 reduziert, aber der Druck p1 gegenüber dem Ausgangswert kurzzeitig erhöht. Die Reduzierung des Drucks p2 bewirkt, dass die eine Membrane zusammen mit der Druckstange bedingt durch die Federkräfte der Rückstellfeder in Löserichtung bewegt wird. Die Erhöhung des Drucks p1, welcher auf den Federspeicherbremskolben in Bremszuspannrichtung wirkt, resultiert in einer kleinen Bewegung des Federspeicherbremskolbens in Bremszuspannrichtung, so dass sich der Formschluss zwischen dem wenigstens einen Verriegelungselement und dem zylinderfesten Bauteil lösen kann, wodurch die Verriegelungseinrichtung entriegelt wird.

Sodann wird auch der Druck p1 reduziert, wodurch die Federkräfte der Rückstellfeder den Feststellbremszylinder in die Bremslösestellung als Ausgangsstellung bringen.

Die Drücke p1 und p2 werden bevorzugt von einem Bremsbetätigungsorgan, beispielsweise von einem Betriebsbremsventil in getrennten Druckkreisen erzeugt.

Zum Feststellbremsen wird der Druck p1 in den einen Druckanschluss eingesteuert, wodurch sich der Feststellbremskolben in Bremszuspannrichtung bewegt und dadurch Druck auf die weitere Membrane sowie diese kontaktierende eine Membrane und damit auf die Druckstange ausübt bis eine vorgegebene Feststellbremskraft erreicht ist. Um den Feststellbremskolben in der Feststellbremsstellung zu arretieren wird ein gegenüber dem Druck p1 größerer Druck in den weiteren Druckanschluss eingesteuert, welcher auf das Betätigungselement der Verriegelungseinrichtung wirkt. Wie oben bereits beschrieben, muss zum Zustandekommen der Verriegelung sich der Feststellbremskolben etwas in Bremslöserichtung bewegen. Dazu wird der Druck p1 etwas gesenkt. Damit ist der Feststellbremskolben in der Feststellbremsstellung verriegelt und sowohl der Druckanschluss als auch der weitere Druckanschluss wird druckentlastet, da für has Halten des verriegelten Feststellbremskolbens kein Druck p1 oder p2 notwendig ist. In der Feststellbremsstellung ist das Volumen der Betriebsbremskammer daher minimal. Mithin kontaktiert die eine Membrane die weitere Membrane wegen der über die Druckstange übertragenen Feststellbremskräfte.

Zum Lösen der Feststellbremse wird in den einen Druckanschluss ein Druck p1 eingesteuert. Die dadurch bedingte Belastung des Feststellbremskolbens in Bremszuspannrichtung bewirkt, dass sich die Verriegelungseinrichtung entriegelt und sich der federbelastete Feststellbremskolben in Bremslösestellung bewegen kann.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Feststellbremszylinders in einer Ausgangsstellung;
- Fig.2: eine vergrößerte Querschnittsdarstellung einer Verriegelungseinrichtung des kombinierten Betriebsbrems- und Feststellbremszylinders von Fig.1;
- Fig.3: eine vergrößerte Vorderansicht der Verriegelungseinrichtung von Fig.2;
- Fig.4: eine Querschnittsdarstellung des kombinierten Betriebsbrems- und Feststellbremszylinders von Fig.1 beim Einleiten einer Betriebsbremsung;
- Fig.5: eine Querschnittsdarstellung des kombinierten Betriebsbrems- und Feststellbremszylinders von Fig.1 beim Arretieren des Feststellbremskolbens in einer Lüftspielüberwindungsstellung;
- Fig.6: eine Querschnittsdarstellung des kombinierten Betriebsbrems- und Feststellbremszylinders von Fig.1 bei einer Teilbremsung;
- Fig.7: eine Querschnittsdarstellung des kombinierten Betriebsbrems- und Feststellbremszylinders von Fig.1 bei einer Vollbremsung;
- Fig.8: eine Querschnittsdarstellung des kombinierten Betriebsbrems- und Feststellbremszylinders von Fig.1 beim Lösen der Betriebsbremsung;
- Fig.9: eine Querschnittsdarstellung des kombinierten Betriebsbrems- und Feststellbremszylinders von Fig.1 beim Einleiten einer Feststellbremsung;
- Fig.10: eine Querschnittsdarstellung des kombinierten Betriebsbrems- und Feststellbremszylinders von Fig.1 beim weiteren Einleiten der Feststellbremsung;
- Fig.11: eine Querschnittsdarstellung des kombinierten Betriebsbrems- und Feststellbremszylinders von Fig.1 beim Arretieren des Feststellbremskolbens in der Feststellbremsstellung;
- Fig.12: eine Querschnittsdarstellung des kombinierten Betriebsbrems- und Feststellbremszylinders von Fig.1 beim Lösen der Feststellbremsung.

### Beschreibung der Ausführungsbeispiele

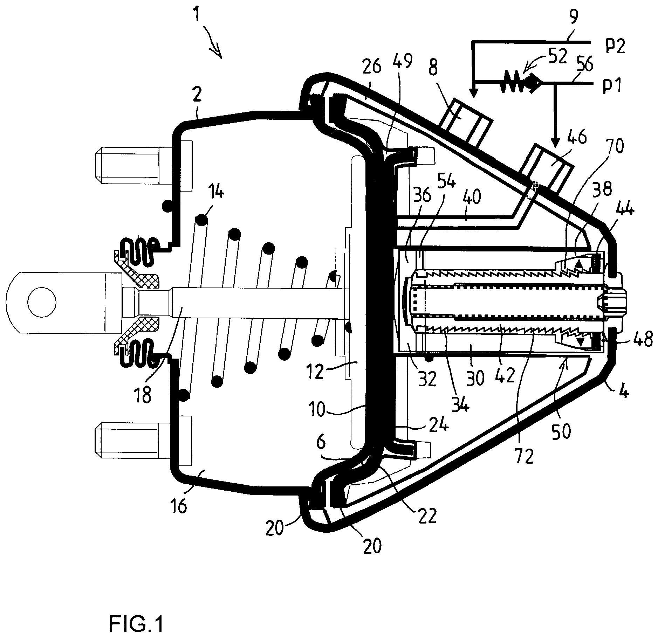

In Fig.1 ist ein kombinierter pneumatischer Betriebsbrems- und Feststellbremszylinder 1 einer pneumatischen oder elektro-pneumatischen Bremsanlage eines Fahrzeugs dargestellt. Der kombinierte Betriebsbrems- und Feststellbremszylinder 1 besteht aus einem Betriebsbremszylinder 2 und aus einem mit diesem baulich und funktionell verbundenen Feststellbremszylinder 4.

Eine Betriebsbremskammer 6 des Betriebsbremszylinders 2 ist über einen Druckluftkanal 26 mit einem Druckanschluss 8 verbunden, über welchen zum Betätigen des Betriebsbremszylinders 2 Druckluft eingelassen und abgelassen wird. Dieser Druckanschluss 8 ist über eine Druckleitung 9 bevorzugt mit einem hier aus Maßstabsgründen nicht gezeigten Bremsbetätigungsorgan, beispielsweise mit einem Ventileinrichtung mit Einlassventil und Auslassventil verbunden, welche durch den Fahrer betätigt wird und abhängig von seiner Betätigung einen Druck p2 in die Betriebsbremskammer 6 einsteuert.

Die Druckluft bzw. der Druck p2 wirkt auf eine in den Betriebsbremszylinder 2 eingesetzte Membrane 10 ein, an deren entgegen gesetzter Seite ein Druckstück in Form eines steifen Membrantellers 12 vorgesehen ist. Genauer trennt die Membrane 10 die mit Druckmittel be- und entlastbare Betriebsbremskammer 6 des Betriebsbremszylinders 2 von einer eine am Membranteller 12 abgestützte Rückstellfeder 14 aufnehmende Federkammer 16. Der Membranteller 12 ist mit einer Druckstange 18 verbunden, die mit einem hier nicht gezeigten Bremsbetätigungsmechanismus außerhalb des kombinierten Betriebsbrems- und Feststellbremszylinders 1 zusammenwirkt. Hierbei kann es sich beispielsweise um Betätigungselemente einer Scheibenbremse eines Kraftfahrzeugs handeln.

Der Betriebsbremszylinder 2 ist ein aktiver Bremszylinder, d.h. dass die Betriebsbremse durch Belüften der Betriebsbremskammer 6 zugespannt und durch Entlüften gelöst wird. Die sich einerseits am Membranteller 12 und andererseits am Boden des Betriebsbremszylinders 2 abstützende Rückstellfeder 14 sorgt dafür, dass die Druckstange 18 bei entlüfteter Betriebsbremskammer 6 in die Bremslösestellung zurückgeholt wird.

Ein radial äußerer Befestigungsrand 20 der Membrane 10 weist einen keilförmigen, sich nach radial innen hin verjüngenden Querschnitt auf. Dieser radial äußere Befestigungsrand 20 der Membrane 10 mit dem keilförmigen, sich nach radial innen verjüngenden Querschnitt ist in eine komplementär geformte Aufnahme mit keilförmigem, sich nach radial außen erweiternden Querschnitt im Bereich einer Trennebene zwischen dem Betriebsbremszylinder 2 und dem Feststellbremszylinder 4 geklemmt.

Die Betriebsbremskammer wird zwischen der in Fig.1 linken Membrane 10 und einer weiteren, in Fig.1 rechten Membrane 22 gebildet, welche ebenfalls mit einem sich nach radial innen hin verjüngenden Befestigungsrand 20 in eine komplementär geformte Aufnahme mit keilförmigem, sich nach radial außen erweiternden Querschnitt im Bereich der Trennebene zwischen dem Betriebsbremszylinder 2 und dem Feststellbremszylinder 4 geklemmt ist. Die beiden Membranen 10, 22 sind im druckentlasteten Zustand der Betriebsbremskammer 6 parallel zueinander und senkrecht zu einer Mittelachse des kombinierten pneumatischen Betriebsbrems- und Feststellbremszylinders 1angeordnet und elastisch ausgebildet. Insbesondere können sie in Richtung der Mittelachse des kombinierten pneumatischen Betriebsbrems- und Feststellbremszylinders 1 in Bremszuspann- bzw. Bremslöserichtung bewegt werden.

Die Membrane 22 ist auf ihrer von der Betriebsbremskammer 6 weg weisenden Seite mit einem Teller 24 eines Feststellbremskolbens 30 des Feststellbremszylinders 4 fest verbunden. Bevorzugt mündet der den Druckanschluss 8 mit der Betriebsbremskammer 6 verbindende Druckluftkanal 26 zwischen die Befestigungsränder 20 der Membrane 10, 22, welche dann eine Zu- und Abströmöffnung für die Betriebsbremskammer 6 zwischen sich ausbilden.

In dem Feststellbremszylinder 4 ist der Feststellbremskolben 30 axial geführt, welcher an seinem zur Membrane 22 weisenden Ende 32 den Teller 24 trägt, an welchem die Membrane 22 befestigt ist. Mithin ist der Teller 24 mit dem Ende 32 fest verbunden. Der Feststellbremskolben 30 ist bevorzugt becherförmig ausgebildet, wobei das eine Ende 32 einen den Innenraum 34 des Feststellbremskolbens 30 verschließenden Boden 36 aufweist, während das andere Ende 38 des Feststellbremskolbens 30 offen ist, damit eine an dem vom Betriebsbremszylinder 2 weg weisenden Ende des Feststellbremszylinders 4 und in einer zentralen Öffnung des Feststellbremszylinders 4 gehaltene Hohlstange 42 in den Feststellbremszylinder 4 hineinragen kann.

Zwischen dem zum Betriebsbremszylinder 2 weisenden Ende des Feststellbremszylinders 4 und dem Teller 24 ist eine über einen Druckanschluss 46 und einen Druckluftkanal 40 be- und entlüftbare Steuerkammer 49 ausgebildet.

Zwischen dem anderen offenen Ende 38 des Feststellbremskolbens 30 und der Hohlstange 42 ist eine Steuerkammer 48 einer Verriegelungseinrichtung 50 als Ringkammer ausgebildet, in welcher ein Betätigungselement 44 aufgenommen ist. Das Betätigungselement 44 betätigt die mechanische Verriegelungseinrichtung 50 zur Verriegelung des Feststellbremskolbens 30. Bei Belüftung der Steuerkammer 48 wird der Feststellbremskolben 30 außerdem in Bremszuspannrichtung gespannt.

Der Feststellbremskolben 30 ist gegen den in den Steuerkammern 48, 49 herrschenden Druck beispielsweise durch eine hier nicht gezeigte Hutfeder in Bremslöserichtung federbelastet. In der Wandung des Feststellbremskolbens 30 sind im Bereich seines Bodens 36 mehrere beispielsweise radiale Verbindungskanäle 54 ausgebildet, um den Innenraum 34 des Feststellbremskolbens 30 mit der Steuerkammer 49 zu verbinden. Da der Boden 36 des Feststellbremskolbens 30 ebenfalls eine Wirkfläche für den Druck im Innenraum 34 darstellt, bildet dieser Innenraum 34 des Feststellbremskolbens 30 einen Teil der Steuerkammer 49 aus.

Besonders bevorzugt ist der Druckanschluss 46 über ein Rückschlagventil 52 mit dem Druckanschluss 8 verbunden, wobei das Rückschlagventil 52 eine Strömung von dem Druckanschluss 46 zu dem Druckanschluss 8 erlaubt, aber eine Strömung von dem Druckanschluss 8 zu dem einen Druckanschluss 46 unterbindet. In den Druckanschluss 46 wird ein Druck p1 eingesteuert, welcher von einem in Bezug zum Druck p2 getrennten Druckkreis der Ventileinrichtung erzeugt wird, d.h. für jeden Druckkreis ist bevorzugt ein eigenes Einlassventil und Auslassventil vorgesehen. Die in die Druckanschlüsse 8, 46 eingesteuerten Drücke p1 und p2 werden daher bevorzugt in getrennten Druckkreisen der Ventileinrichtung erzeugt und jeweils in einer separaten Druckleitung 9, 56 geführt.

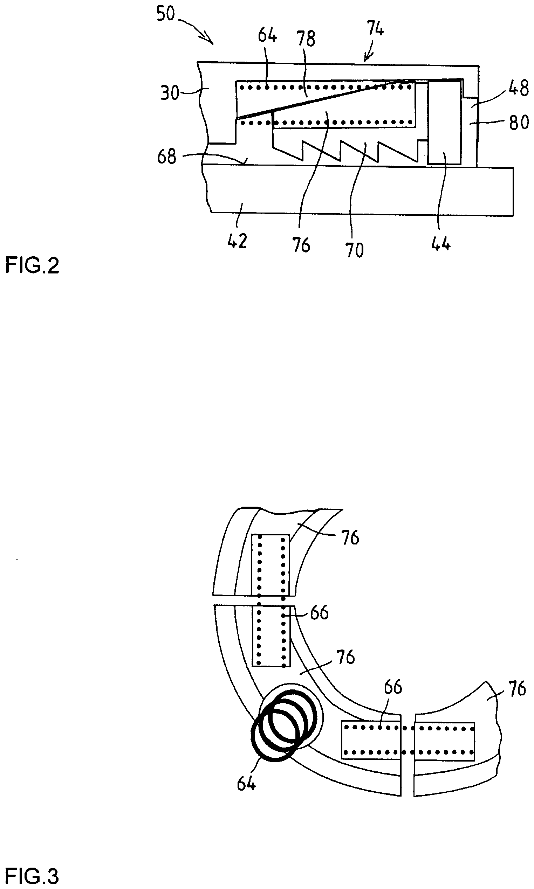

Wie bereits oben beschrieben, weist die Verriegelungseinrichtung 50 ein durch den in der Steuerkammer 48 anstehenden Druck steuerbares Betätigungselement 44 auf, welches mehrere durch Federmittel 64, 66 außer Eingriff mit einer radial äußeren Umfangsfläche 68 der Hohlstange 42 vorgespannte und am Feststellbremskolben 30 geführte Verriegelungselemente 70 in Eingriff mit der radial äußeren Umfangsfläche 68 der Hohlstange 42 betätigt. An der radial äußeren Umfangsfläche 68 der Hohlstange 42 ist eine Eingriffsfläche 72 für die Verriegelungselemente 70 ausgebildet. Andererseits betätigt Betätigungselement 44 den Feststellbremskolben 30 in Bremszuspannrichtung. Hierzu betätigt das Betätigungselement 44 die Verriegelungselemente 70 und den Feststellbremskolben 30 mittels einer Keilübersetzung 74, welche am besten anhand von Fig.2 und Fig.3 zu sehen ist.

Die Keilübersetzung 74 weist keilförmige Querschnitte 76 auf, an deren radial innerer Umfangsfläche die Verriegelungselemente 70 ausgebildet sind, wobei die keilförmigen Querschnitte 76 sich über den Umfang erstreckende Kreisbogenabschnitte bilden, welche die Hohlstange 42 kreisringartig umschließen und gegeneinander durch Federelemente 66 in Umfangsrichtung auf Umfangsabstand zueinander und insbesondere auf radialen Abstand zur Eingriffsfläche 72 an der radial äußeren Umfangsfläche 68 der Hohlstange 42 belastet sind.

Weiterhin sind die keilförmigen Querschnitte 76 gegenüber einem weiteren keilförmigen Querschnitt 78 der Keilübersetzung 74 durch weitere Federelemente 64 derart federbelastet, dass die einen keilförmigen Querschnitte 76 von dem weiteren keilförmigen Querschnitt 78 in Axialrichtung gesehen auf Abstand belastet sind. Der weitere keilförmige Querschnitt 78 wird bevorzugt durch eine umlaufende Keilfläche in einer radial inneren Ausnehmung 80 am Ende 38 des Feststellbremskolbens 30 gebildet, in welcher auch die einen keilförmigen Querschnitte 76 und das Betätigungselement aufgenommen sind. Bevorzugt ist das Betätigungselement 44 als ein in Axialrichtung auf die einen keilförmigen Querschnitte 76 Druck ausübender Ring ausgebildet. Somit können sich das Betätigungselement 44 sowie die einen keilförmigen Querschnitte 76 in der Ausnehmung 80 axial bewegen bzw. sind dort axial geführt.

Wie anhand von Fig.2 leicht vorstellbar ist, wird bei einer axialen Betätigung des Betätigungselements 44 infolge einer Druckeinsteuerung in die Steuerkammer 48 der Verriegelungseinrichtung 50 der Feststellbremskolben 30 axial in Bremszuspannrichtung und die einen keilförmigen Querschnitte 76 zusammen mit den Verriegelungselementen 70 radial in Eingriff mit der Eingriffsfläche 72 der Hohlstange 42 gedrängt.

Die Verriegelungselemente 70 sind beispielsweise klauenartig ausgebildet, zum formschlüssigen Eingriff in an der Eingriffsfläche 72 ausgebildete komplementäre Klauen, wobei die Klauen derart schräg ausrichtet sind, dass der Formschluss in Bremszuspannrichtung des Feststellbremskolbens gelöst und in Bremslöserichtung des Feststellbremskolbens hergestellt bzw. durch die im Feststellbremsfall wirkenden Bremskräfte verstärkt wird.

Generell steht ein Druck, welcher in der Steuerkammer 49 des Feststellbremskolbens 30 ansteht über die Verbindungskanäle 54 auch im Innenraum 34 des Feststellbremszylinders 30 an und wirkt auf dessen Boden 36 als zusätzliche Kraft in Bremszuspannrichtung.

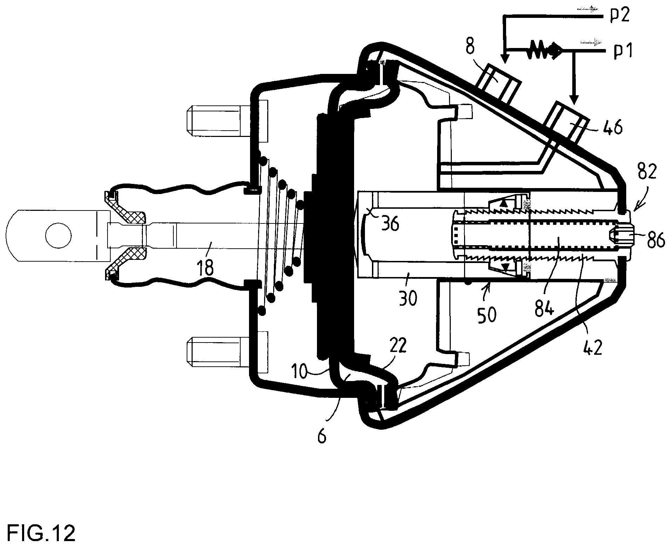

Für den Fall, dass die Druckmittelversorgung ausfällt bzw. gestört ist, ist zum Notlösen der zugespannten Feststellbremse eine integrierte Notlöseeinrichtung 82 vorgesehen (siehe Fig.12), mit einer gegenüber einem Innengewinde der Hohlstange 42 verschraubbaren Notlösespindel 84. Die Notlösespindel 84 ist gegen den Boden 36 des Feststellbremskolbens 30 verschraubbar ist, um diesen ein Stück weit in Bremszuspannrichtung zu bewegen, damit die Verriegelungseinrichtung 50 manuell entriegelt werden kann. Die Notlösespindel 84 weist an ihrem vom Boden 36 des Feststellbremskolbens 30 weg weisenden Ende eine Ansatzfläche 86 für ein manuell bedienbares Werkzeug auf, mit welchem dann die Notlösespindel 84 verdreht und damit gegenüber der Hohlstange 42 verschraubt werden kann.

Vor diesem Hintergrund ist die Funktionsweise des kombinierten Betriebs- und Feststellbremszylinders 1 dann wie folgt:
Ausgehend von dem in Fig.1 gezeigten Ausgangszustand, in welchem die beiden Druckanschlüsse druckentlastet sind, soll eine Betriebsbremsung durchgeführt werden.

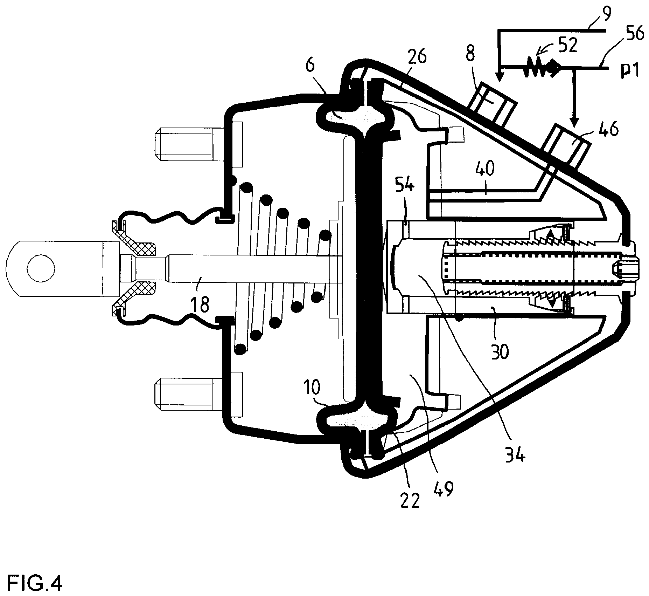

Zum Betriebsbremsen wird die Ventileinrichtung beispielsweise über ein Fußpedal in Bremszuspannstellung betätigt, um über die Leitung 56 des einen Druckkreises (Leitung 56) zunächst den Druckanschluss 46 und dann über das sich öffnende Rückschlagventil 52 auch den Druckanschluss 8 mit einem Druck p1 zu beaufschlagen. Diese Situation ist in Fig.4 gezeigt. Die Leitung 9 des anderen Druckkreises bleibt indes druckentlastet.

Die Druckbeaufschlagung der beiden Druckanschlüsse 8, 46 mit dem Druck p1 bewirkt, dass dieser Druck p1 über den Druckluftkanal 40 in die Steuerkammer 49 wie auch in den Innenraum 34 gesteuert wird und dadurch der Feststellbremskolben 30 in Bremszuspannrichtung, d.h. in Fig.4 nach links betätigt wird. Weiterhin steht der Druck p1 über den Druckluftkanal 26 auch in der Betriebsbremskammer 6 an. Er ist aber nicht groß genug, um die Membrane 10 von der Membrane 22 abzuheben bzw. um das Volumen der Betriebsbremskammer 6 zu vergrößern. Der Druck p1 ist relativ gering z.B. 50 mbar und dient lediglich zur Überwindung des Lüftspiels. Der Druck p1 ist daher gerade so groß, dass der Feststellbremskolben 30 zusammen mit den Membranen 22, 10 und der Druckstange 18 in Zuspannrichtung bis in eine Stellung betätigt werden kann, in welcher gerade das Lüftspiel überwunden ist (Lüftspielüberwindungsstellung).

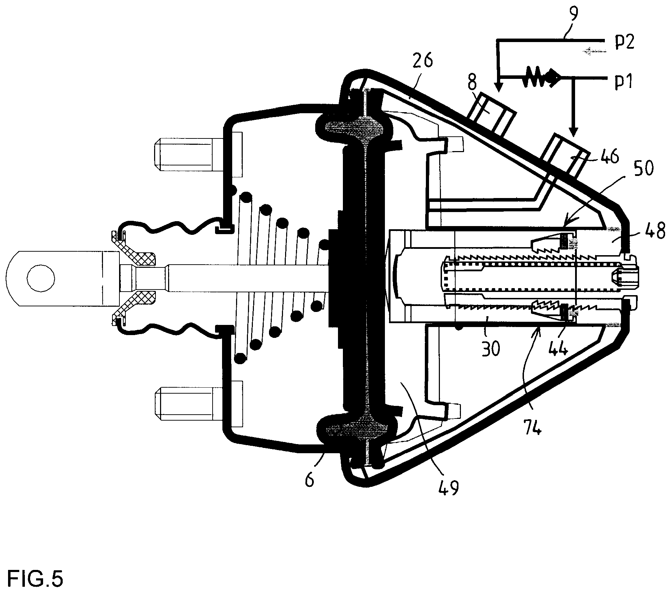

Sodann wird der Feststellbremskolben 30 zusammen mit der Membrane 22 in der Lüftspielüberwindungsstellung arretiert, indem in den Druckanschluss 8 ein gegenüber dem Druck p1 wesentlich größerer Druck p2 in die Leitung 9 des anderen Druckkreises eingesteuert wird, welcher dann über den Druckluftkanal 26 auch in der Steuerkammer 48 und damit auf das Betätigungselement 44 der Verriegelungseinrichtung 50 wirkt. Das Betätigungselement 44 wirkt auf die Keilübersetzung 74 (Fig.5).

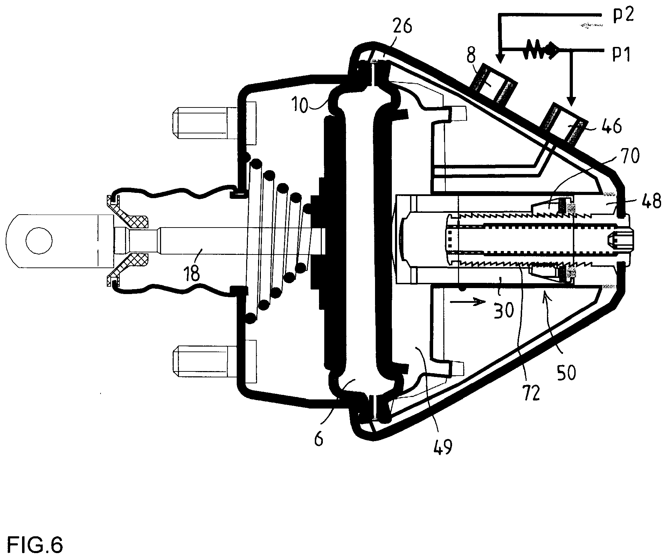

Schließlich wird der Druck p1 an dem Druckanschluss 46 und damit in der Steuerkammer 49 und im Innenraum 34 des Feststellbremskolbens 30 etwas gesenkt, damit sich der Feststellbremskolben 30 ein Stück weit in Bremslöserichtung bewegen kann, was in Fig.6 durch den Pfeil angedeutet ist, wodurch die Verriegelungselemente 70 in die Eingriffsfläche 72 eingreifen können (Fig.2) und die Verriegelungseinrichtung 50 den Feststellbremskolben 30 in der Lüftspielüberwindungsstellung verriegelt.

Im Einzelnen drängt unter dem Einfluss des in der Steuerkammer 48 anstehenden Drucks p2 das Betätigungselement 44 über die Keilübersetzung 74 die Verriegelungselemente 70 in Eingriff mit der zylinderfesten Eingriffsfläche 72, jedoch ist deren Federvorspannung noch zu groß, um einen Eingriff zuzulassen. Erst wenn der Druck p1 etwas gesenkt worden ist, sinkt der Druck am Feststellbremskolben 30, so dass sich dieser ein kleines Stück weit in Bremslöserichtung bewegen kann, wodurch der Eingriff zwischen den Verriegelungselementen 70 und der Eingriffsfläche 72 stattfinden kann. Der Druck p1 auf den Feststellbremskolben 30 wird dann aufrecht erhalten.

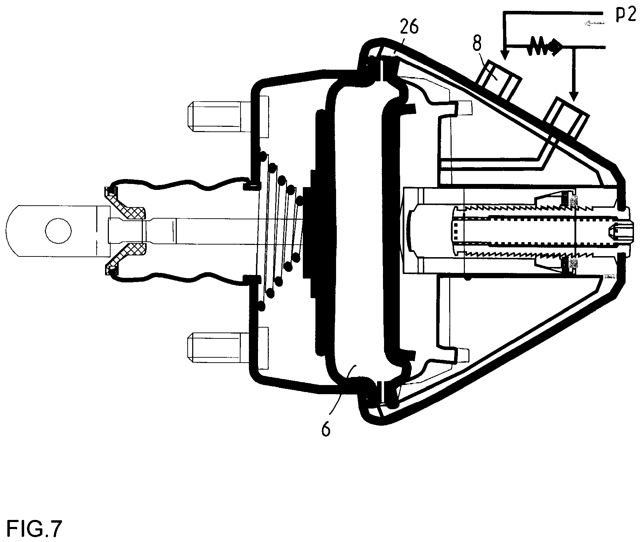

Die Einsteuerung des Drucks p2 an dem Druckanschluss 8 bewirkt weiterhin einen Druckanstieg in der Betriebsbremskammer 6, so dass die Membrane 10 mit der Druckstange 18 in Bremszuspannrichtung gedrängt wird, um über den Bremsmechanismus Bremskräfte zu erzeugen. Der Unterschied zwischen einer in Fig.6 gezeigten Teilbremsung, d.h. einer Bremsung mit gegenüber einer maximalen Bremskraft reduzierten Bremskraft und einer in Fig.7 gezeigten Vollbremsung mit der maximalen Bremskraft liegt dann in der Höhe des Drucks p2 bzw. in der Dauer seiner Einsteuerung.

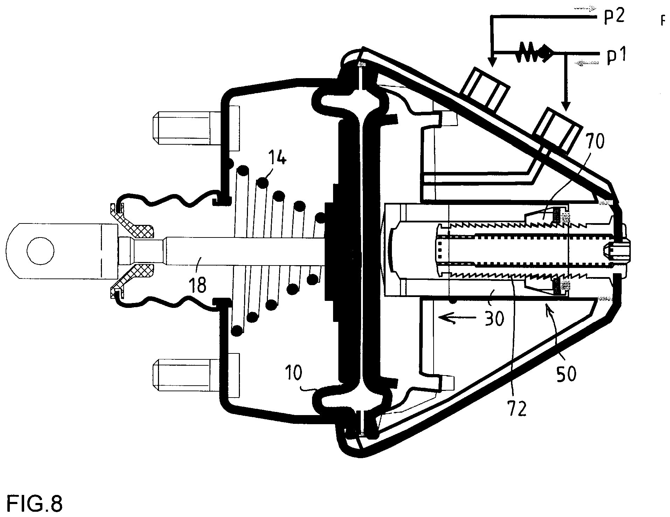

Zum Lösen der Betriebsbremse wird der Druck p2 auf den ursprünglichen Wert des Drucks p1 reduziert, aber der Druck p1 kurzzeitig erhöht. Die Reduzierung des Drucks p2 bewirkt, dass die Membrane 10 zusammen mit der Druckstange 18 bedingt durch die Federkräfte der Rückstellfeder 14 in Bremslöserichtung bewegt wird. Die Erhöhung des Drucks p1 resultiert in einer kleinen Bewegung des Federspeicherbremskolbens 30 in Bremszuspannrichtung, wie durch den Pfeil in Fig.8 angedeutet ist, so dass sich der Formschluss zwischen den Verriegelungselementen 70 und der Eingriffsfläche 72 lösen kann, wodurch die Verriegelungseinrichtung 50 entriegelt wird. Sodann wird auch der Druck p1 reduziert, wodurch die Federkräfte der Rückstellfeder 14 den Feststellbremszylinder 30 in die Bremslösestellung als Ausgangsstellung wie in Fig.1 gezeigt bringen können.

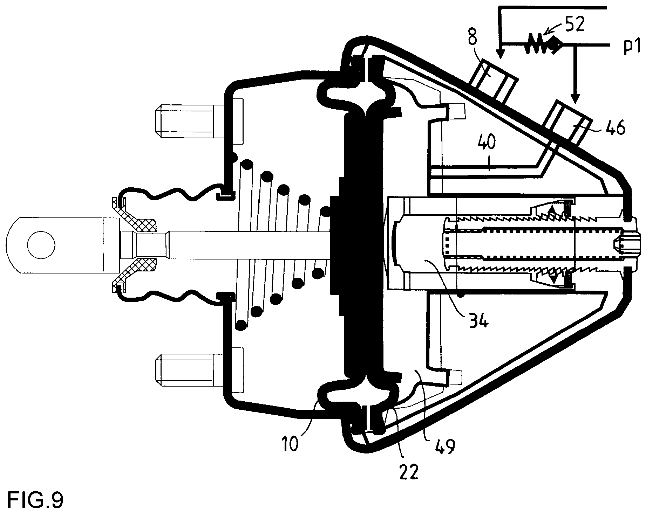

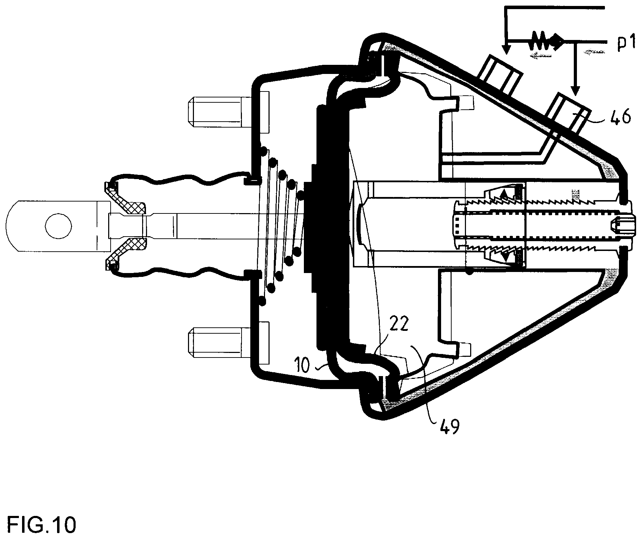

Zum Feststellbremsen wird ausgehend von der Ausgangsstellung von Fig.1 der Druck p1 in den Druckanschluss 46 und über das Rückschlagventil 52 auch in den Druckanschluss 8 eingesteuert, wodurch der Druck p1 in der Steuerkammer 49 bzw. im Innenraum 34 ansteht und sich dadurch der Feststellbremskolben 30 in Bremszuspannrichtung bewegt, um Druck auf die sich dann kontaktierenden Membranen 10, 22 und damit auf die Druckstange 18 auszuüben bis eine vorgegebene Feststellbremskraft erreicht ist. Diese Situation zeigen Fig.9 und Fig.10, wobei in Fig.10 der Druckaufbau in der Steuerkammer 49 fortgeschrittener und die gewünschte Feststellbremskraft erreicht ist.

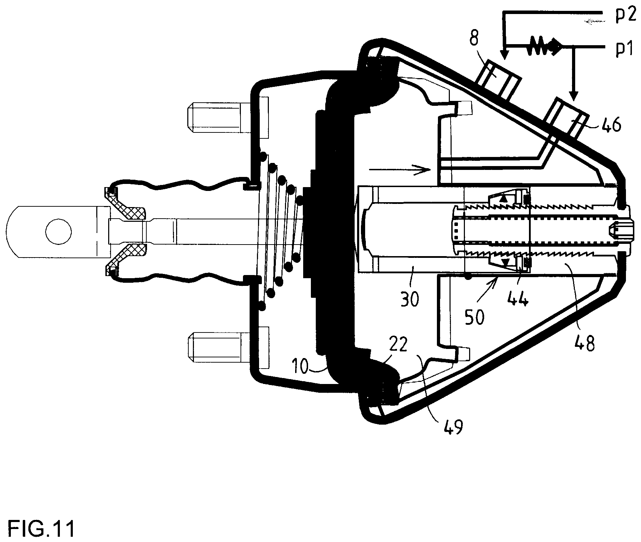

Um den Feststellbremskolben 30 in der Feststellbremsstellung von Fig.10 zu arretieren wird ein gegenüber dem Druck p1 größerer Druck p2 in den Druckanschluss 8 eingesteuert, welcher dann in der Steuerkammer 48 auf das Betätigungselement 44 der Verriegelungseinrichtung 50 wirkt. Wie oben bereits beschrieben, muss sich zum Zustandekommen der Verriegelung der Feststellbremskolben 30 etwas in Bremslöserichtung bewegen, wie in Fig.11 durch den Pfeil angedeutet ist. Dazu wird der nach wie vor in der Steuerkammer 49 anstehende Druck p1 etwas gesenkt. Damit ist der Feststellbremskolben 30 in der Feststellbremsstellung verriegelt, wie Fig.11 zeigt.

Danach werden die Druckanschlüsse 8, 46 druckentlastet, da für das Halten des verriegelten Feststellbremskolbens 30 kein Druck p1 oder p2 notwendig ist. In der Feststellbremsstellung ist das Volumen der Betriebsbremskammer 6 daher minimal. Mithin kontaktiert die Membrane 10 die Membrane 22 wegen der über die Druckstange 18 übertragenen Feststellbremskräfte. Die drucklose und verriegelte Festbremsstellung ist in Fig.12 gezeigt.

Zum Lösen der Feststellbremse wird in den Druckanschluss 46 der Druck p1 eingesteuert. Die dadurch bedingte Belastung des Feststellbremskolbens 30 in Bremszuspannrichtung bewirkt, dass sich die Verriegelungseinrichtung 50 entriegelt und sich der federbelastete Feststellbremskolben 30 in Bremslösestellung bewegen kann.

Zum Notlösen der zugespannten Feststellbremse, wenn z.B. keine Druckluft zur Verfügung steht, wird die Notlösespindel 84 mit Hilfe eines an der Ansatzfläche 86 angesetzten Werkzeugs gegen den Boden 36 des Feststellbremskolbens 30 verschraubt, um diesen ein Stück weit in Bremszuspannrichtung zu bewegen, damit die Verriegelungseinrichtung 50 entriegelt werden kann. Nach Entriegelung der Verriegelungseinrichtung 50 wird dann der Feststellbremskolben 30 durch die Belastung der Hutfeder in Bremslösestellung bzw. in die Ausgangslage von Fig.1 bewegt. Die Belastung der Verriegelungselemente 70 durch die Federn 64, 66 sorgt dabei dafür, dass diese in entriegelter Position gehalten werden.

### Bezugszeichenliste

- 1: kombinierter Betriebs- und Feststellbremszylinder
- 2: Betriebsbremszylinder
- 4: Feststellbremszylinder
- 6: Betriebsbremskammer
- 8: Druckanschluss
- 9: Druckleitung
- 10: Membrane
- 12: Membranteller
- 14: Rückstellfeder
- 16: Federkammer
- 18: Druckstange
- 20: Befestigungsrand
- 22: Membrane
- 24: Teller
- 26: Druckluftkanal
- 30: Feststellbremskolben
- 32: Ende
- 34: Innenraum
- 36: Boden
- 38: Ende
- 40: Druckluftkanal
- 42: Hohlstange
- 44: Betätigungselement
- 46: Druckanschluss
- 48: Steuerkammer
- 49: Steuerkammer
- 50: Verriegelungseinrichtung
- 52: Rückschlagventil
- 54: Verbindungskanäle
- 56: Druckleitung
- 64: Federn
- 66: Federn
- 68: Umfangsfläche
- 70: Verriegelungselemente
- 72: Eingriffsfläche
- 74: Keilübersetzung
- 76: keilförmiger Querschnitt
- 78: keilförmiger Querschnitt
- 80: Ausnehmung
- 82: Notlöseeinrichtung
- 84: Notlösespindel
- 86: Ansatzfläche

## Patentansprüche

1. Verfahren zum Betrieb eines kombinierten Betriebs- und Feststellbremszylinders (1) einer druckmittelbetätigten Fahrzeugbremsanlage, beinhaltend eine in einem Betriebsbremszylinder (2) angeordnete und mit Druckmittel beaufschlagbare oder vom Druckmittel entlastbare Betriebsbremskammer (6), welche von wenigstens einer Membrane (10) begrenzt ist, die gegen die Wirkung einer Rückstellfeder (14) über eine Druckstange (18) einen Bremsmechanismus einer Bremse betätigt, sowie einen Feststellbremszylinder (4) mit wenigstens einer druckmittelbeaufschlagbaren oder druckmittelentlastbaren Steuerkammer (49), um einen mittels einer Verriegelungseinrichtung (50) verriegelbaren Feststellbremskolben (30) in Bremszuspannrichtung bzw. Bremslöserichtung zu steuern, wobei die Betriebsbremskammer (6) wenigstens teilweise zwischen der einen Membrane (10) und einer weiteren Membrane (22) gebildet wird, welche weitere Membrane mit dem Feststellbremskolben (30) verbunden und zusammen mit diesem in Bremszuspann- und Bremslöserichtung der Bremse bewegbar ist, **dadurch gekennzeichnet, dass** bei einer Betriebsbremsanforderung
a) die wenigstens eine Steuerkammer (49) des Feststellbremskolbens (30) mit einem ersten Druck (p1) druckmittelbeaufschlagt wird, der ausreichend ist, den Feststellbremskolben (30) zusammen mit den Membranen (10, 22) in eine Lüftspielüberwindungsstellung zu betätigen, in welcher gerade das Lüftspiel der Bremse überwunden wird, und dann
b) der Feststellbremskolben (30) mittels der Verriegelungseinrichtung (50) in der Lüftspielüberwindungsstellung verriegelt wird, und dann
c) die Betriebsbremskammer (6) mit einem zweiten Druck (p2) beaufschlagt wird, um die eine Membrane (10) relativ zu der zusammen mit dem Feststellbremskolben (30) verriegelten weiteren Membrane (22) in Bremszuspannrichtung zu betätigen und dadurch die Betriebsbremskraft zu erzeugen.

2. Verfahren nach Anspruch 1, **dadurch gekennzeichnet, dass** bei einer Feststellbremsanforderung
a) die wenigstens eine Steuerkammer (49) des Feststellbremskolbens (30) mit einem Druck (p1) druckmittelbeaufschlagt wird, welcher den Feststellbremskolben (30) zusammen mit den Membranen (22, 10) in eine Feststellbremsstellung betätigt, in welcher eine vorgegebene Feststellbremskraft erzeugt wird, und
b) der Feststellbremskolben (30) mittels der Verriegelungseinrichtung (50) in der Feststellbremsstellung verriegelt wird.

3. Verfahren nach Anspruch 1 oder 2, **dadurch gekennzeichnet, dass** die Steuerkammer (49) des Feststellbremskolbens (30) mit einem Druckanschluss (46) in Verbindung steht.

4. Verfahren nach einem der vorhergehenden Ansprüche, **dadurch gekennzeichnet, dass** die Verriegelungseinrichtung (50) von dem in eine Steuerkammer (48) der Verriegelungseinrichtung (50) eingesteuerten Druck (p2) druckmittelgesteuert wird, wobei die Steuerkammer (48) der Verriegelungseinrichtung (50) mit einem weiteren Druckanschluss (8) in Verbindung steht, mit welchem auch die Betriebsbremskammer (6) verbunden ist.

5. Verfahren nach den Ansprüchen 3 und 4, **dadurch gekennzeichnet, dass** der eine Druckanschluss (46) über ein Rückschlagventil (52) mit dem weiteren Druckanschluss (8) verbunden ist, wobei das Rückschlagventil (52) eine Strömung von dem einen Druckanschluss (46) zu dem weiteren Druckanschluss (8) erlaubt, aber eine Strömung von dem weiteren Druckanschluss (8) zu dem einen Druckanschluss (46) unterbindet.

6. Verfahren nach Anspruch 4 oder 5, **dadurch gekennzeichnet, dass** die Verriegelungseinrichtung (50) wenigstens ein durch den in der Steuerkammer (48) der Verriegelungseinrichtung (50) anstehenden Druck steuerbares Betätigungselement (44) aufweist, welches einerseits wenigstens ein durch Federmittel (64, 66) außer Eingriff mit einem zylinderfesten Bauteil (42) vorgespanntes und am Feststellbremskolben (30) geführtes Verriegelungselement (70) in Eingriff mit dem zylinderfesten Bauteil (42) bringt und andererseits den Feststellbremskolben (30) in Zuspannrichtung betätigt.

7. Verfahren nach Anspruch 6, **dadurch gekennzeichnet, dass** das Betätigungselement (44) das Verriegelungselement (70) und den Feststellbremskolben (30) mittels einer Keilübersetzung (74) betätigt, wobei eine axiale Betätigung des Betätigungselements (44) infolge einer Druckmitteleinsteuerung in die Steuerkammer (48) der Verriegelungseinrichtung (50) den Feststellbremskolben (30) axial in Zuspannrichtung und das Verriegelungselement (70) radial in Eingriff mit einem zylinderfesten Bauteil (42) drängt.

8. Verfahren nach Anspruch 7, **dadurch gekennzeichnet, dass** das zylinderfeste Bauteil (42) durch eine im Feststellbremszylinder (4) angeordnete Hohlstange gebildet wird, an deren radial äußerer Umfangsfläche (68) eine Eingriffsfläche (72) für das wenigstens eine Verriegelungselement (70) ausgebildet ist.

9. Verfahren nach Anspruch 8, **dadurch gekennzeichnet, dass** mehrere die Hohlstange (42) kreisringartig umschließende und derart gegeneinander federbelastete Verriegelungselemente (70) vorgesehen sind, dass die Verriegelungselemente (70) nach radial außen, in eine von der Eingriffsfläche (72) entfernte Lage gedrängt sind.

10. Verfahren nach einem der Ansprüche 7 bis 9, **dadurch gekennzeichnet, dass** die Keilübersetzung (74) wenigstens einen keilförmigen Querschnitt (76) mit dem wenigstens einen Verriegelungselement (70) aufweist, welcher gegenüber einem weiteren keilförmigen Querschnitt (78) derart federbelastet wird, dass der eine keilförmige Querschnitt (76) von dem weiteren keilförmigen Querschnitt (78) in Axialrichtung gesehen weg gedrängt wird.

11. Verfahren nach Anspruch 10, **dadurch gekennzeichnet, dass** das Betätigungselement (44) als ein in Axialrichtung auf den einen keilförmigen Querschnitt (76) Druck ausübender Ring ausgebildet ist.

12. Verfahren nach Anspruch 11, **dadurch gekennzeichnet, dass** der Feststellbremskolben (30) gegen den in der Steuerkammer (48) der Verriegelungseinrichtung (50) herrschenden Druck federbelastet und als ein am radial äußeren Umfang der Hohlstange (42) axial geführter Hohlkolben ausgebildet ist, mit einem offenen Ende (38), an welchem die Keilübersetzung (74) sowie das Betätigungselement (44) aufgenommen sind, sowie mit einem als Boden (36) ausgebildeten anderen Ende (32), und dass in der Wandung des Feststellbremskolbens (30) wenigstens ein Verbindungskanal (54) ausgebildet ist, um einen Innenraum (34) des Feststellbremskolbens (30) mit einem Druckanschluss zu verbinden.

13. Verfahren nach Anspruch 12, **dadurch gekennzeichnet, dass** die Steuerkammer (48) der Verriegelungseinrichtung (50) als Ringkammer zwischen dem Betätigungselement (44) und einem Ende des Feststellbremszylinders (4) ausgebildet ist.

14. Verfahren nach einem der Ansprüche 9 bis 13, **dadurch gekennzeichnet, dass** das wenigstens eine Verriegelungselement (70) und das zylinderfeste Bauteil (42) derart ausgebildet sind, dass ein Formschluss zwischen dem Verriegelungselement (70) und dem zylinderfesten Bauteil (42) durch eine Bewegung des Feststellbremskolbens (30) in Bremslöserichtung herstellbar und durch eine Bewegung des Feststellbremskolbens (30) in Bremszuspannrichtung lösbar ist.

## Claims

1. A method for the operation of a combined service and parking brake cylinder (1) of a pressure-medium-actuated vehicle brake system, comprising a service brake chamber (6) that is arranged in a service brake cylinder (2), can be charged with and emptied of a pressure medium and is delimited by at least one diaphragm (10) that actuates a brake mechanism of a brake against the action of a return spring (14) via a pressure rod (18), and comprising a parking brake cylinder (4) having at least one control chamber (49) that can be charged with and emptied of a pressure medium in order to control a parking brake piston (30), which can be locked by means of a locking device (50), in a brake-application or brake-release direction, the service brake chamber (6) being formed in part at least between the diaphragm (10) and another diaphragm (22), this further diaphragm (22) being connected to the parking brake piston (30) and it being possible to actuate this further diaphragm (22) together with the parking brake piston (30) in a brake-application or brake-release direction of the brake, **characterised in that** when the service brake is solicited
a) the at least one control chamber (49) of the parking brake piston (30) is charged with a pressure medium at a pressure (p1) that is sufficient to actuate the parking brake piston (30) together with the diaphragms (10, 22) into an air-gap-overcoming position in which the air gap of the brake is overcome, and then
b) the parking brake piston (30) is locked in the air-gap-overcoming position by means of the locking device (50), and then
c) the service brake chamber (6) is charged with a second pressure (p2) in order to actuate the diaphragm (10) relative to the further diaphragm (22), which is locked together with the parking brake piston (30), in the brake-application direction and thereby to generate the service braking force.

2. A method according to claim 1, **characterised in that** when the service brake is solicited,
a) the at least one control chamber (49) of the parking brake piston (30) is charged with a pressure medium at a pressure (p1) that actuates the parking brake piston (30) together with the diaphragms (22, 10) into a parking braking position in which a predefined parking braking force is generated, and
b) the parking brake piston (30) is locked in the parking braking position by means of the locking device (50).

3. A method according to claim 1 or 2, **characterised in that** the control chamber (49) of the parking brake piston (30) is connected to a pressure port (46).

4. A method according to any of the preceding claims, **characterised in that** the locking device (50) is pressure medium controlled by the pressure (p2) introduced into a control chamber (48) of the locking device (50), the control chamber (48) of the locking device (50) being connected to a further pressure port (8), to which the service brake chamber (6) is also connected.

5. A method according to claims 3 and 4, **characterised in that** the pressure port (46) is connected via a check valve (52) to the further pressure port (8), the check valve (52), permitting a flow from the pressure port (46) to the further pressure port (8) but preventing a flow from the further pressure port (8) to the pressure port (46).

6. A method according to claim 4 or 5, **characterised in that** the locking device (50) has at least one actuating element (44) that can be controlled by the pressure prevailing in the control chamber (48) of the locking device (50) and that the locking device (50), on the one hand, engages at least one locking element (70), which is preloaded by spring means (64, 66) in a position in which it is disengaged from a component (42) that is fixed with respect to the cylinder and guided on the parking brake cylinder (30), with the component (42) fixed with respect to the cylinder and, on the other, actuates the parking brake piston (30) in the brake-application direction.

7. A method according to claim 6, **characterised in that** the actuating element (44) actuates the locking element (70) and the parking brake piston (30) by means of a wedge-type transmission means (74), the axial actuation of the actuating element (44) resulting from the introduction of a pressure medium into the control chamber (48) of the locking device (50) forcing the parking brake piston (30) axially in the brake-application direction and the locking element (70) radially into engagement with a component (42) fixed with respect to the cylinder.

8. A method according to claim 7, **characterised in that** the component (42) fixed with respect to the cylinder takes the form of a hollow rod that is arranged in the parking brake cylinder (4) and on the radially outer circumferential surface (68) of which there is formed an engagement surface (72) for the at least one locking element (70).

9. A method according to claim 8, **characterised in that** there is provided a plurality of locking elements (70) that surround the hollow rod (42) in the manner of a circular ring and are spring-loaded against one another such that the locking elements (70) are forced radially outward into a position remote from the engagement surface (72).

10. A method according to any of claims 7 to 9, **characterized in that** the wedge-type transmission means (74) has at least one wedge-type cross-section (76) having the at least one locking element (70) that is spring-loaded in relation to a further wedge-type cross-section (78) such that, viewed in the axial direction, the wedge-type cross-section (76) is forced away from the further wedge-type cross-section (78).

11. A method according to claim 10, **characterised in that** the actuating element (44) takes the form of a ring that exerts pressure in the axial direction on the wedge-type cross-section (76).

12. A method according to claim 11, **characterised in that** the parking brake piston (30) is spring-loaded against the pressure prevailing in the control chamber (48) of the locking device (50), takes the form of a hollow piston that is guided axially on the radially outer circumference of the hollow rod (42), has an open end (38) at which the wedge-type transition means (74) and the actuating element (44) are accommodated and has another end (32) that takes the form of a base (36), and **in that** at least one connecting duct (54) is formed in the wall of the parking brake piston (30) in order to connect an interior space (34) of the parking brake piston (30) to a pressure port.

13. A method according to claim 12, **characterised in that** the control chamber (48) of the locking device (50) takes the form of an annular chamber between the actuating element (44) and one end of the parking brake cylinder (4).

14. A method according to any of claims 9 to 13, **characterised in that** the at least one locking element (70) and the component (42) fixed with respect to the cylinder are designed such that a form fit between the locking element (70) and the component (42) fixed with respect to the cylinder can be produced by a movement of the parking brake piston (30) in the brake-release direction and released by a movement of the parking brake piston (30) in the brake-application direction.

## Revendications

1. Procédé pour faire fonctionner un cylindre (1) combiné de frein de service et de frein de stationnement d'un système de frein de véhicule à actionnement au moyen d'un fluide sous pression, comportant une chambre (6) de frein de service, qui est disposée dans le cylindre (2) de frein de service, qui peut être alimentée en fluide sous pression ou qui peut être déchargée du fluide sous pression et qui est délimitée par au moins une membrane (10), qui actionne, à l'encontre de l'effet d'un ressort (14) de rappel, un mécanisme d'un frein par l'intermédiaire d'un poussoir (18), ainsi qu'un cylindre (4) de frein de stationnement ayant au moins une chambre (49) de commande, pouvant être alimentée en fluide sous pression ou délestée de fluide sous pression, pour faire aller un piston (30) de frein de stationnement, pouvant être verrouillé au moyen d'un dispositif (50) de verrouillage ? dans un sens de serrage du frein ou dans un sens de desserrage du frein, la chambre (6) de frein de service étant formée, au moins en partie, entre la une membrane (10) et une autre membrane (22), laquelle autre membrane est reliée au piston (30) de frein de stationnement et peut, ensemble avec celui-ci, être déplacée dans le sens de serrage du frein et dans le sens de desserrage du frein, **caractérisé en ce que**, s'il se produit une demande de frein de service
a) la au moins une chambre (49) de commande du piston (30) de frein de stationnement est alimentée en un fluide sous pression ayant une première pression (p1) suffisante pour mettre le piston (30) de frein de stationnement, ensemble avec les membranes (10, 22), dans une position surmontant le jeu de garnitures, dans laquelle le jeu de garnitures du frein est surmonté exactement, et ensuite
b) le piston (30) du frein de stationnement est, au moyen du dispositif (50) de verrouillage, verrouillé dans la position où le jeu de garnitures est surmonté, et ensuite
c) la chambre (6) de frein de service est alimentée en une deuxième pression (p2) pour faire aller la une membrane (10) par rapport à l'autre membrane (22) verrouillée, ensemble avec le piston (30) de frein de stationnement, dans le sens de serrage du frein et produire ainsi la force de frein de service.

2. Procédé suivant la revendication 1, **caractérisé en ce que**, s'il est demandé un freinage de stationnement
a) la au moins une chambre (49) de commande du piston (30) de frein de stationnement est alimentée en fluide sous pression à une pression (p1), qui fait aller le piston (30) de frein de stationnement, ensemble avec les membranes (22, 10), dans une position de frein de stationnement, dans laquelle une force de frein de stationnement donnée à l'avance est produite et
b) le piston (30) de frein de stationnement est verrouillé dans la position de frein de stationnement au moyen du dispositif (50) de verrouillage.

3. Procédé suivant la revendication 1 ou 2, **caractérisé en ce que** la chambre (49) de commande du piston (30) de frein de stationnement est en liaison avec un raccord (46) de pression.

4. Procédé suivant l'une de revendications précédentes, **caractérisé en ce que** le dispositif (50) de verrouillage est commandé par fluide sous pression, par la pression (p2) commandée dans une chambre (48) de commande du dispositif (50) de verrouillage, la chambre (48) de commande du dispositif (50) de verrouillage étant en liaison avec un autre raccord (8) de pression, avec lequel la chambre (6) de fin de service communique également.

5. Procédé suivant les revendications 3 et 4, **caractérisé en ce qu'**un raccord (46) de pression communique, par un clapet antiretour (52), avec l'autre raccord (8) de pression, le clapet antiretour (52) autorisant un écoulement du un raccord (46) de pression à l'autre raccord (8) de pression, mais empêchant un écoulement de l'autre raccord (8) de pression au un raccord (46) de pression.

6. Procédé suivant la revendication 4 ou 5, **caractérisé en ce que** le dispositif (50) de verrouillage a au moins un élément (44) d'actionnement, qui peut être commandé par la pression régnant dans la chambre (48) de commande du dispositif (50) de verrouillage et qui met, d'une part, un élément (70) de verrouillage, précontraint par des moyens (64, 66) de ressort, hors de prise avec une pièce (42) solidaire du cylindre et ? guidé au piston (30) de frein de stationnement, en prise avec la pièce (42) solidaire du cylindre, et, d'autre part, actionne le piston (30) de frein de stationnement en le faisant aller dans le sens du serrage.

7. Procédé suivant la revendication 6, **caractérisé en ce que** l'élément (44) d'actionnement actionne l'élément (70) de verrouillage et le piston (30) de frein de stationnement au moyen d'une transmission (74) à coin, un actionnement axial de l'élément (44) d'actionnement, en raison d'une commande par fluide sous pression dans la chambre (48) de commande du dispositif (50) de verrouillage, repoussant le piston (30) de frein de stationnement axialement dans le sens de serrage et l'élément (70) de verrouillage radialement en le mettant en prise avec une pièce (42) solidaire du cylindre.

8. Procédé suivant la revendication 7, **caractérisé en ce que** la pièce (42) solidaire du cylindre est formée d'une barre creuse, qui est montée sur le cylindre (4) de frein de stationnement et sur la surface (68) périphérique extérieure radialement de laquelle est constituée une surface (72) de pénétration du au moins un élément (70) de verrouillage.

9. Procédé suivant la revendication 8, **caractérisé en ce qu'**il est prévu plusieurs éléments (70) de verrouillage, qui entourent, à la manière d'un anneau de cercle, la barre (42) creuse et qui sont soumis mutuellement à l'action d'un ressort, de manière à ce que les éléments (70) de verrouillage soient repoussés vers l'extérieur radialement pour venir dans une position éloignée de la surface (72) de pénétration.

10. Procédé suivant l'une des revendications 7 à 9, **caractérisé en ce que** la transmission (74) à coin a au moins une section (76) transversale cunéiforme ayant le au moins un élément (70) de verrouillage, qui peut être soumise à l'action d'un ressort par rapport à une autre section (78) transversale cunéiforme, de manière à ce que la une section (76) transversale cunéiforme soit éloignée, considéré dans la direction axiale, de l'autre section (78) transversale cunéiforme.

11. Procédé suivant la revendication 10, **caractérisée en ce que** l'élément (44) d'actionnement est constitué sous la forme d'un anneau appliquant une pression dans la direction axiale à la une section (76) transversale cunéiforme.

12. Procédé suivant la revendication 11, **caractérisé en ce que** le piston (30) de frein de stationnement est soumis à l'action d'un ressort à l'encontre de la pression régnant dans la chambre (48) de commande du dispositif (50) de verrouillage et est constitué sous la forme d'un piston creux, guidé axialement sur le pourtour extérieur radialement de la barre (42) creuse et ayant une extrémité (38) ouverte, où la transmission (74) à coin ainsi que l'élément (44) d'actionnement sont reçus, ainsi qu'une autre extrémité (32) constituée sous la forme d'un fond (36) et **en ce qu'**il est constitué, dans la paroi du piston (30) de frein de stationnement, au moins un conduit (54) de liaison pour mettre un espace (34) intérieur du piston (30) de frein de stationnement en communication avec un raccord de pression.

13. Procédé suivant la revendication 12, **caractérisé en ce que** la chambre (48) de commande du dispositif (50) de verrouillage est constituée sous la forme d'une chambre annulaire entre l'élément (44) d'actionnement et une extrémité du cylindre (4) de frein de stationnement.

14. Procédé suivant l'une des revendications 9 à 13, **caractérisé en ce que** le au moins un élément (70) de verrouillage et la pièce (42) solidaire du cylindre sont constitués de manière à ce qu'une complémentarité de forme, entre l'élément (70) de verrouillage et la pièce (42) solidaire du cylindre, puisse être obtenue par un déplacement du piston (30) de frein de stationnement dans le sens de desserrage du frein et puisse être défaite par un déplacement du piston (30) de frein de stationnement dans le sens de serrage du frein.
